Europäisches Patentamt

European Patent Office (11) Publication number: **0 088 528**

Office européen des brevets A1

(19)

(12) **EUROPEAN PATENT APPLICATION**

(21) Application number: **83300756.0**

(22) Date of filing: **15.02.83**

(51) Int. Cl.³: **G 01 S 13/76, H 01 Q 25/00**

(30) Priority: **04.03.82 GB 8206417**

(43) Date of publication of application: **14.09.83**
**Bulletin 83/37**

(84) Designated Contracting States: **DE FR GB IT NL**

(71) Applicant: **COSSOR ELECTRONICS LIMITED, The Pinnacles, Harlow Essex CM19 5BB (GB)**

(72) Inventor: **Longley, John Horace, 44 Brook Lane Field, Harlow Essex (GB)**
Inventor: **Chase, Gordon Harrison, 2 Rye Hill Road, Harlow Essex (GB)**
Inventor: **Storey, Albert Henry, 62 Binghams, Harlow Essex (GB)**
Inventor: **Watson, Brian Walter, 15 Coney Gree, Sawbridgeworth Hertfordshire (GB)**

(74) Representative: **Pears, David Ashley et al, REDDIE & GROSE 16 Theobalds Road, London WC1X 8PL (GB)**

(54) **Secondary surveillance radar system.**

(57)  A ground station transmits signals to interrogate transponders mounted on aircraft and receives replies transmitted by the transponders. Transmission and reception can take place using either of two beams, an upper and a lower beam, whose coverage patterns are represented by curves (30), (32) respectively. In each interrogation cycle transmission and reception take place on one beam. Short range replies are ignored if received on the lower beam, long range replies are ignored if received on the upper beam. The limit of long and short range is indicated by the line (34). A suitable aerial is described, being formed of a planer array of vertical elements. Each element comprises a radiating conductor and an active reflector, each in the form of a modified folded Franklin array. The aerial is electrically switchable between elevations of 0,25 and 9,5 degree.

0088528

## SECONDARY SURVEILLANCE RADAR SYSTEM

The invention relates to a secondary surveillance radar (SSR) system and is concerned with the ground station apparatus, rather than the transponders which are interrogated by such apparatus.

Secondary surveillance radar is required to transmit an interrogation signal from a ground station to a target aircraft carrying a transponder and to receive and decode a reply transmitted at a different frequency by the transponder which is triggered by the interrogation signal. The ground station can request the transponder to send either the identity of the aircraft or the height at which it is flying. The information is transmitted as a series of binary digits in positions equally spaced in time. The binary digits are transmitted between two bracket pulses which signal the start and end of the message and approximately are 20 μs apart.

The well known monopulse techinque enables the range and azimuth of the target to be determined from each reply individually. A horizontal array of dipoles or other radiating elements is used to form the transmitting and receiving aerial. The signals from the left-hand set of dipoles are added to produce a left signal and those from the right-hand set are added to produce a right signal. A sum signal and a difference signal can be formed from the left and right signals. The sum signal has a principal maximum of intensity in the azimuthal direction perpendicular to the arrays and has smaller subsidiary maxima, known as side lobes, in other azimuthal directions. The difference signal has a minimum in the azimuthal direction perpendicular to the array.

The azimuth of a target can be determined from the relative strengths of the sum and difference signals on the basis of the known radiation patterns of the sum and difference. While the intensity of a signal will vary with the range and elevation of the target, the ratio of the sum and difference signals is essentially a function of azimuth alone.

In a practical system, a further, control signal is transmitted from the ground in known time relationship to the main interrogation (via the sum pattern) from an omnidirectional aerial, in order to enable transponders to detect side-lobe interrogations which are characterised by a received control signal stronger than the main interrogation.   In practice the "omnidirectional" aerial merely needs to be sufficiently less directional than the sum aerial pattern to achieve this result, and may have a null coinciding  with the main lobe of the sum pattern.  A transponder does not respond to a side-lobe interrogation, thus effecting what is known as side-lobe suppression.

The target aircraft which SSR systems interrogate are typically up to 200 or even 250 nautical miles away (360-460 km) and flying at normal cruising height.   The angle of elevation of such aircraft at the ground station  is typically 1/4°.   The small angle of elevation causes problems because the interrogation and reply paths are very close to the ground.   Hills, buildings or other structures near the ground station may reflect or forwardly scatter some of the energy of the interrogation beam, and cause the beam to interrogate aircraft via indirect paths.   The reply to an indirect interrogation may come via a direct or indirect path. Although height information is not derived by radar techniques in SSR systems,    replies to indirect interrogations can come from false apparent azimuths and  ranges and generally make it difficult to interpret correctly the information sent back to the ground station.

The problem is particularly acute if the radiation pattern of the aerial is symmetrical about the plane of the horizon.   Then, the same signal strength as is transmitted directly to the aircraft is also transmitted into the ground, and much will be reflected.

The problem of spurious replies can be partially solved by analysing the received signals over a period of 75 µs.   If a spurious and a real reply overlap, a bracket signal received in the first or last 25 µs enables spurious pulses to be identified in the middle 25 µs and  thereafter ignored.   If two identical replies are received at different times it is possible to determine which reply is spurious by applying a variety of tests.   Naturally, until the tests have been applied, it is not possible to say what constitutes the middle 25 μs of a 75 μs interval but, provided analysis is conducted over 75 μs rather than 25 μs intervals, it is possible largely to resolve ambiguities.   The way in which this is done forms no part of the present invention and currently used SSR systems employ tests of the nature in question.   They are therefore not described herein.

Primary radar systems, which detect signals reflected off targets, suffer from a related problem known as clutter, caused by spurious reflections or back-scatter off nearby structures.   It is known to reduce the problem of clutter by using two beams, one with the maximum at an elevation of (say) 1/4° and the second at a higher elevation of (say) 6.5°.   The high beam is used to detect close targets (which for a given flight, have a greater angle of elevation than distant targets) and picks up less clutter than the low beam, because only a small amount of energy is transmitted at an elevation sufficiently low to illuminate the nearby structures which cause clutter.   The low beam is used to detect distant targets, reflections from which are received later than clutter reflections and can therefore be separated on a time basis.   The transmission and reception are switched between the beams according to the following cycle which makes up each interrogation:

(1)   Transmit (low beam)

(2)   Transmit (high beam)

(3)   Listen (high beam)

(4)   Listen (low beam).

The second and third steps detect close targets and, as described above, have a satisfactorily low level of clutter. Clutter produced by the low beam from transmission in the first step will arrive at the aerial during the second or third steps and will therefore be largely ignored.   By the  time the system is again listening on the low beam, in the fourth step, sufficient time has elapsed since the transmission on the low beam to ensure that signals received are genuine and come from distant targets. A careful choice of the durations of the individual steps and of the whole cycle and use of fast switching devices to move from step to step produces a primary radar system with an acceptable low clutter

level.   It should be remembered that a primary system transmits a signal and detects reflections from objects, at the same frequency. The target plays a passive role.

A similar solution is not applicable to the SSR false interrogation problem.   The principle, described above, of analysing replies over longer intervals (75 µs) than the reply duration (25 µs) means that listening on one beam would have to continue after switching to the second beam and listening on the second beam would have to commence before switching from the first beam.   These requirements cannot be met in any realistic way and in any event, analysis of received information would be further confused by any attempt to proceed along such lines.

A recent American aerial system, known under the Federal Aviation Authority designation FA 9764, has attempted largely to reduce the spurious interrogation problem for SSR using a peak radiation intensity at an elevation of 6.5°.   The pattern of radiation intensity chosen produces a 0.9 dB difference in signal strength between the elevations of + 1/4° and - 1/4°.   Spurious replies caused by interrogation signals reflected from the ground are reduced, and nearby structures are less intensely illuminated. However, the advantages do not arise solely from the increase of beam elevation.   The maximum intensity is lower than that of other systems, which would alone be expected to reduce spurious interrogations.   This reduction of intensity has also limited the system to medium-range applications.

Despite attendant performance limitations, the physical dimensions of the FA 9764 aerial have been widely adopted for North American SSR systems.   The height  of such aerials is 5ft (1.5 m approx.) and accordingly such aerials will be described hereafter as 5ft aerials.   At 1000 MHz a 5ft aerial is also a $5\lambda$ aerial. The internationally agreed transmit and receive frequencies for an SSR system are 1030 MHz and 1090 MHz.

Known 5ft aerials include ones comprising an array of horizontally spaced vertical radiating elements, each formed by a stack of dipoles.   In order to achieve the required directionality in azimuth, the aerial has a large horizontal aperture, e.g. 26 ft (8 m).

Single or multiple reflectors may be placed behind the radiating array to reduce the back radiation pattern.

Despite a number of attempts to solve the problems of SSR, a need still exists off an SSR system with a long range capability and low level of false replies triggered by forward scatter, which uses an aerial no taller than 5ft or 1.5m approx.

The present invention provides a secondary surveillance radar ground station apparatus comprising a transmitter, a receiver, and an aerial arrangement, characterised in that the aerial arrangement is capable of transmitting and receiving on either of a lower beam providing significant energy at a low angle of elevation and an upper beam providing significant energy at a higher angle of elevation and insignificant energy at the lower angle of elevation, and by control means arranged to effect a succession of interrogation cycles in which transmissions from the lower beam are interspersed with transmissions from the upper beam, and such that, in each cycle, transmission and reception takes place from the same one beam, the control means being further arranged to ignore replies unless they originate within predetermined nearer and further bands of range pertaining to the upper and lower beams respectively.

The switching between the lower and upper beams may involve switching tilt and/or beam width.  This is possible because, although the upper beam needs to be directional, so as to avoid significant radiation at the low angle of elevation (e.g. 1/4°), the lower beam can be broader and can in fact have the same elevation as the upper beam (e.g. 9.5°) so long as there is significant radiation at the low angle.

The present invention can achieve using a 5ft aerial, the objectives of:  (1) Providing maximum power at small elevations, around 1/4° to 1 1/4°, using the low beam;  (2) Providing minimum power at these angles for short range interrogations at which reflections off nearby structures could otherwise cause false interrogations;  (3) Providing minimum power at negative elevations to reduce ground-reflected energy and the number of false or confusing replies associated with it.

The present invention further provides a radar aerial comprising a plurality of vertical radiating elements arranged to form a substantially planar array, each element comprising a pair of radiating conductors, each in the form of a folded array, namely a front radiating conductor and a rear driven reflector conductor spaced behind the front conductor, and feed means arranged to distribute power to and combine power from the front and rear conductors in transmission and reception respectively with relative phases such that the rear conductors act as reflectors for the front conductors.

The invention will be described in more detail, by way of example, with reference to the accompanying drawings, in which:

Fig 1 is a graph showing the gain in decibels of various known aerials as a function of elevation in free space,

Fig 2 is a similar graph to Fig 1 for a 5ft aerial at three different angles of tilt,

Fig 3 is a modified vertical coverage diagram of the radiation pattern generated in use by a system according to the present invention,

Fig 4 is a perspective view of an aerial embodying the present invention,

Fig 5 is a side elevation of an element of one embodiment of the aerial of Fig 4,

Figs 6 to 8 are schematic representations of alternative embodiments of an aerial embodying the present invention, and

Fig 9 is a block diagram of the complete system.

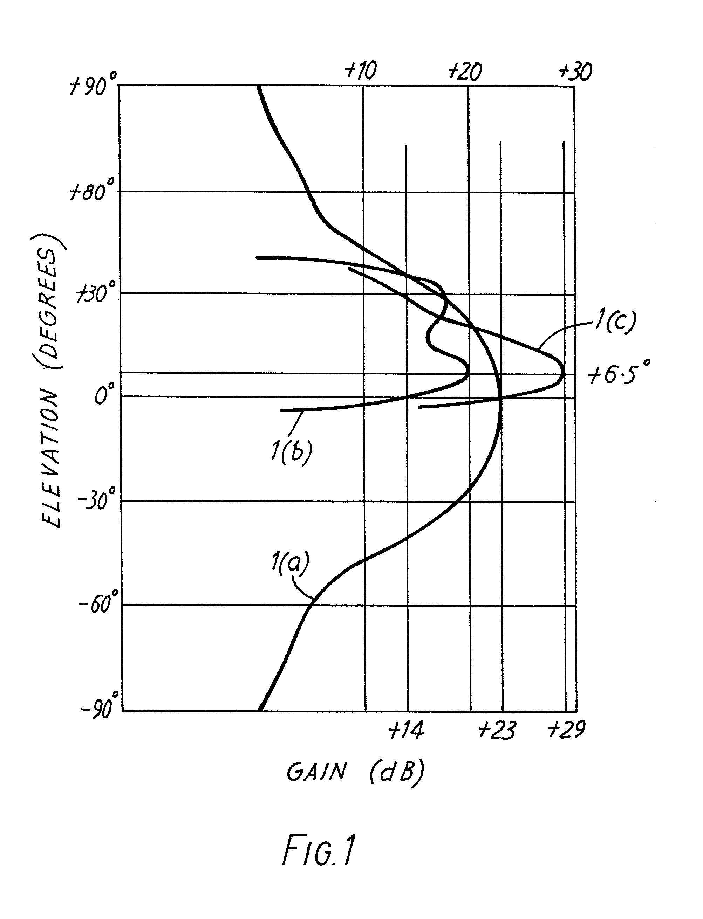

Referring now to Fig 1, the line labelled 1(a) shows the radiation pattern of an SSR system typified by CRS 370 currently in use in the United Kingdom. The pattern is substantially symmetrical about the horizon ($0^{\circ}$ elevation). This system has been found to have sufficient gain at low elevations to detect distant targets (typically at about $+\frac{1}{4}^{\circ}$ elevation), but the high intensity of the radiation transmitted towards the ground causes an unacceptably high level of spurious replies.

The American system FA 9764 discussed above uses a 5 ft aerial with a radiation pattern shown in Fig 1 by the curve labelled 1(b).

This system has fewer spurious reply problems, but also has an unacceptably low radiation intensity at $+\frac{1}{4}^{\circ}$ elevation. Thus, spurious replies are reduced in amplitude but so are long range aircraft replies.

To regain the long range replies, the radiation pattern shown by the curve labelled 1(c) has been proposed. This is the pattern of a 5ft aerial but with greater intensity than the FA 9764 aerial, so that the intensity of the pattern at $+\frac{1}{4}^{\circ}$ elevation is the same as that provided by the system CRS 370. The distant targets are regained with potentially reduced spurious replies, but the intensity transmitted at $+ 6.5^{\circ}$ elevation is very high. International agreements exist to restrict the maximum intensity of radar transmissions so that systems at one location do not interfere with systems elsewhere. The maximum (+ 29 dB) of curve 1(c) in Fig 1 is so near the overall limit that it is impossible to avoid overstepping this limit when operating within the normal tolerances of radiated power.

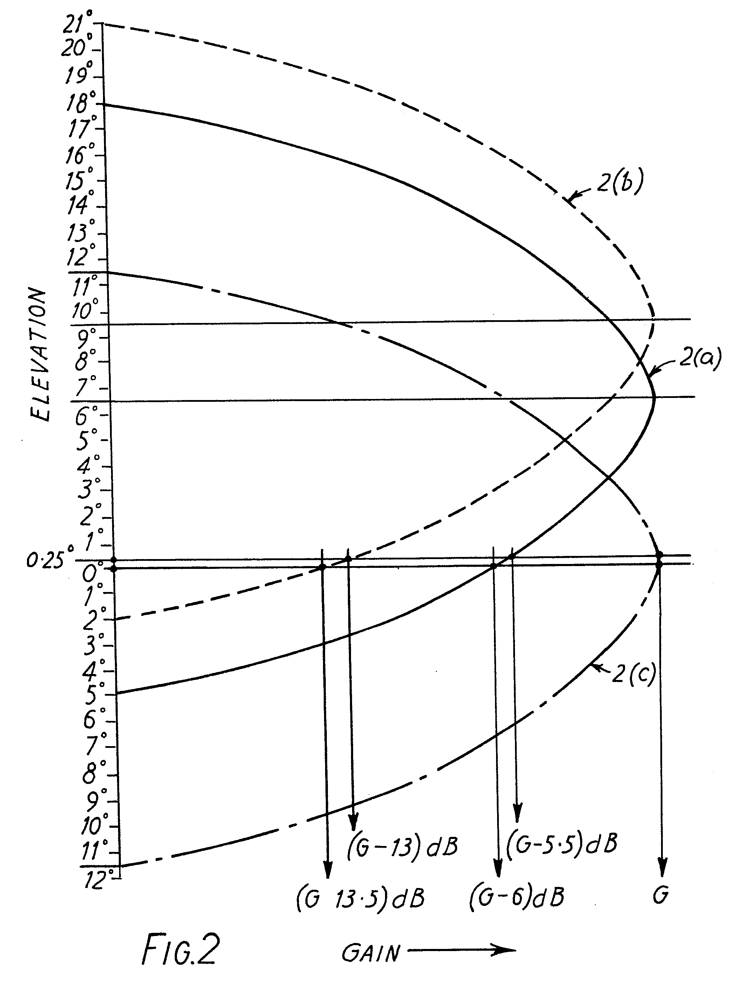

Referring now to Fig 2, curve 2(a) is the free space radiation pattern of a 5ft aerial at a tilt of $6.5^{\circ}$. The system gain at $\frac{1}{4}^{\circ}$ is only 0.5 dB greater than that at $0^{\circ}$. The number of spurious replies received is therefore not greatly reduced. Moreover, in practice, it is difficult to enable adequate intensity to be achieved at $\frac{1}{4}^{\circ}$ for long-range interrogating without exceeding the international limit at $+ 6.5^{\circ}$, because the aerial gain at $6.5^{\circ}$ is 5.5 dB greater than that at $\frac{1}{4}^{\circ}$.

The curve labelled 2(b) is the pattern of the source aerial at a tilt of $9.5^{\circ}$. The peak gain is now 13 dB greater than at at $+ \frac{1}{4}^{\circ}$. Because the ground is more weakly illuminated, fewer false replies are triggered when using this pattern. However, because of the high elevation angle, only short range targets can be interrogated.

The curve labelled 2(c) is the pattern of the same aerial at a tilt of $0^{\circ}$. This can be used to interrogate long range targets because the ground is strongly illuminated causing many false replies. Most false replies, however, occur at short range. Typically 90% of false replies appear to have a range less than 50 nautical miles (90 km). Interrogate power and reply power are reduced as the square of the range. Genuine replies from long range targets will be received later than false replies. It is therefore possible to separate the genuine replies from the false.

The present invention combines the advantages of a high beam and a low beam whilst avoiding the disadvantages, by using a high beam with an elevation greater than say 8.5$^O$ for short range targets and a low beam with an elevation less than $\frac{1}{2}^O$ for long range targets, i.e.9.5°and 0.25$^O$ in the example given.

The improvement provided by the invention can best be shown by the following consideration of the discrimination of the various systems; that is, the difference in gain of the aerial between directions at which targets are interrogated and at which nearby structures and the ground are illuminated.

The aerial of curve 2(a) has a gain at small angles which varies by approximately 1.8 dB per degree. Thus the discrimination between targets at $\frac{1}{4}^O$ and reflectors at 0$^O$ is 0.45 dB (1.8 dB/4) and for reflectors at $-\frac{1}{4}^O$ is 0.9 dB (1.8dB/2). For reflectors and targets both at $\frac{1}{4}^O$ the discrimination is, of course, zero. The lower intensity of ground illumination reduces the maximum range of interrogation via reflectors. The maximum range is a substantially linear function of angle at small negative elevations, and at $-3^O$ the maximum range is about 35% of the range at $\frac{1}{4}^O$. This compares favourably with the maximum range of interrogation via reflectors of the aerial of curve 1(a), which is substantially independent of angle at small angles.

When the present invention is used to interrogate long range aircraft (on the low beam) the maximum intensity is directed at the target (see curve 2(c)). An advantage of 5.5 dB over curve 2(a) therefore accrues for long range targets. On the uptilted beam, the power directed towards local reflectors (at $+\frac{1}{4}^O$) is 13 dB less than the maximum. Moreover, false replies, which have short range, are ignored on the low beam. Therefore the discrimination between targets and reflectors both at $\frac{1}{4}^O$ is 13 dB, because substantially all false replies seen by the system at $\frac{1}{4}^O$ arise from illumination of reflectors by the high beam. Similarly, for reflectors at 0$^O$ the discrimination is 13.5 dB and at $-\frac{1}{4}^O$ is 14 dB. The described embodiment of the present invention therefore has a discrimination against reflectors which is 13 dB greater than that of the curve 2(a).

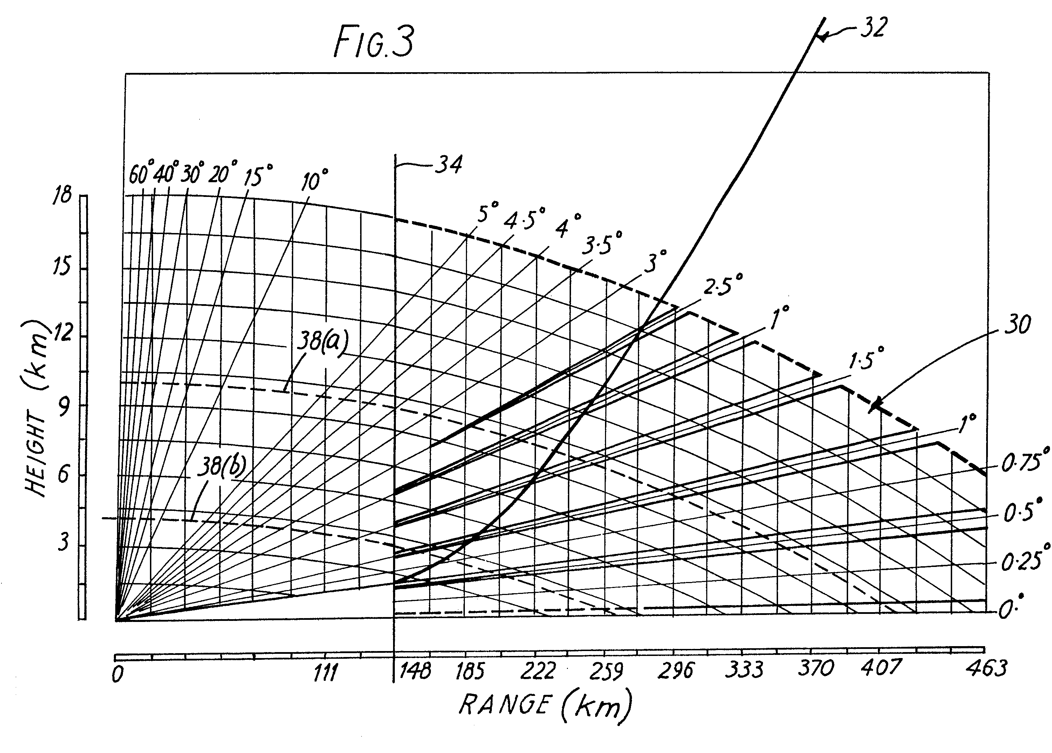

The radiation patterns used in the preferred embodiment are shown in Fig 3. Curve 30 is the coverage pattern of a 1.5 ft (45 cm) aerial at $0^{\circ}$ elevation which differs little from that of a 5ft aerial at the same elevation. The reasons for using such a pattern will appear later, in the description of the aerial used. At small angles of elevation, minima occur at elevations spaced by approximately $\frac{1}{2}^{\circ}$, the first occurring at $0^{\circ}$. The pattern is an interference pattern produced by the well known Lloyd's Mirror effect, by interference between radiation received directly from the aerial, and that received after reflection from the ground. The height of the aerial above the ground is arranged so that the pattern has a maximum at $+\frac{1}{4}^{\circ}$ elevation, the elevation at which most distant targets of interest will be.

Curve 32 shows the edge of the coverage pattern of a 5 ft aerial with a $9^{\circ}$ tilt. The Lloyd's Mirror effect is negligible because of the low intensity of the ground illumination with this beam. The coverage in the region represented to the left of of the curve 32 is substantially complete and gap-free.

The aerial (to be described later) of the present invention can produce either a lower beam with the coverage pattern of curve 30 or an upper beam with the coverage pattern of curve 32. Control means effect a series of interrogation cycles using the beams. In each cycle an interrogation pulse is transmitted and the system then listens on the same beam for a reply from a transponder in the target aircraft. Each cycle takes place exclusively on either the upper or lower beam. The lower beam is used to receive replies from targets beyond a predetermined threshold range only. The upper beam is used to interrogate targets below the threshold which is indicated by the line 34, at a range of 150 Km, approxim. The number of false replies is substantially reduced because the upper beam has a peak gain about 13 dB greater than that illuminating nearby structures (see Fig 2), whilst the low beam is only used for long range interrogations. The reception technique described above in which the system analyses over 75 us and uses a series of tests to detect the presence of spurious pulses can be used with both beams.

Within the scope of the invention the ratio of interrogations on the upper and lower beams, and the threshold ranges can be varied. The threshold range for each beam need not be the same. It is most convenient to use the two beams alternately.

It will be seen from Fig 3 that a region 36 is not covered by either beam, being below the curve 32 and below the threshold for the lower beam. In practice aircraft of interest to an SSR system are outside this region, the majority being in the region between lines 38(a) and 38(b). When the SSR is located at or close to an airfield the approach angle will be in a range above the region 36. Other types of radar systems will normally be available to detect any targets which do enter the region 36.

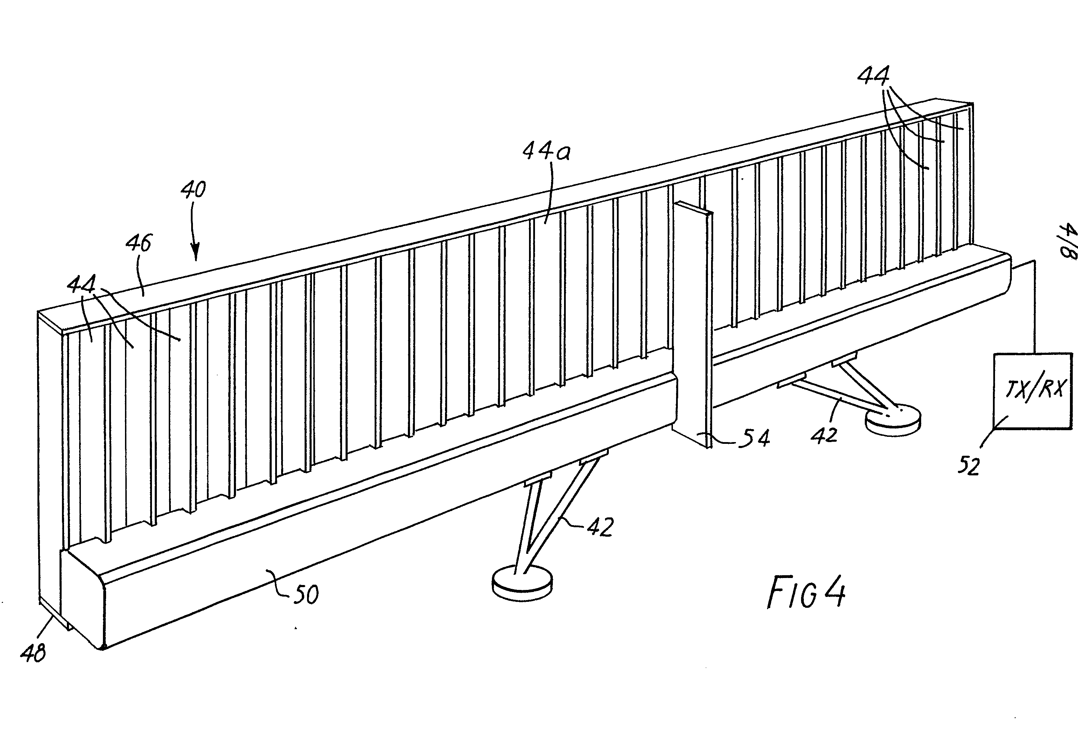

Referring now to Fig 4 two embodiments of an aerial of the invention will now be described.

An aerial 40 is supported on a rotating platform by legs 42 and comprises a horizontal line of equally spaced vertical radiating elements 44. The radiating elements 44 are supported and held equally spaced by upper and lower horizontal frame members 46, 48 so that the radiating elements 44 and the frame members 46, 48 form a vertical, substantially planar array.

A casing 50 houses a horizontal distribution network which is in electrical connection with the lower end of each radiating element. The elements could be centre-fed rather than end-fed. When the aerial is being used for transmission, signals generated by transmit/receive means 52, shown schematically in Fig 4 are fed to each element 44, by way of the distribution network. When the aerial is being used to detect replies, signals received by the elements 44 are fed to the transmit/receive means 52 by way of the distribution network. If the system is of the monopulse SSR type described above, the distribution network includes circuitry to produce the required sum and difference signals. The system is also applicable to non-monopulse operation.

The control signal is provided by two vertical radiating elements, one of which is the central element 44a of the array. The second control element 54 is supported by the casing 50 at the same height as and parallel to the central element 44a and spaced directly behind this element. The second control element 54 is typically identical to the elements 44 of the array but fires to the back of the array.   Each individual element produces an intensity pattern in the form of a cardioid.   The pattern of the central element 44a has a maximum in the forward direction and that of the second element 54 has a maximum in the backward direction.

The control pulse for side-lobe suppression is fed in a way well known in itself, additionally using the central element 44a of the elements 44 and is also fed, at reduced power, to the rear control element 54.   It is necessary to include rearward energy in the control pattern because the main beam pattern exhibits some back-fire energy which must be included within the action of side-lobe suppression.

It should be noted that the individual radiators of all the elements 44, 44a and 54 are at the same horizontal levels so that the Lloyds mirror effect is the same for the control pattern as for the main beam pattern.   Accordingly the relationship that the control pulse is weaker than the main pulse on the main beam of the sum pattern but stronger than the main pulse on any side-lobe of the sum pattern is presented at all angles of elevation.

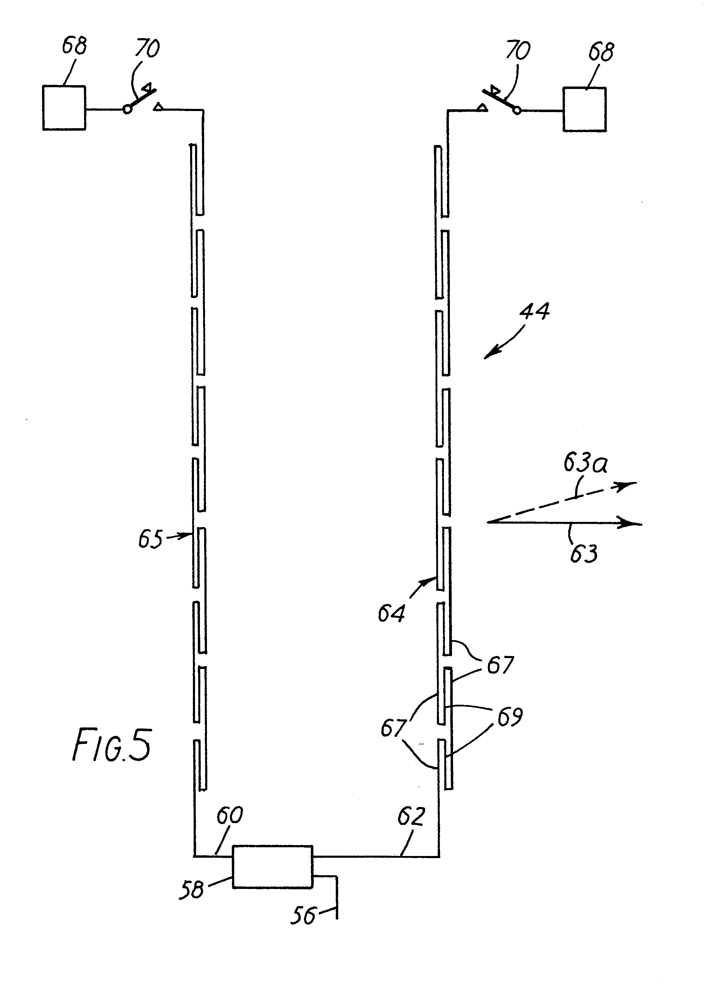

Fig 5 is a schematic illustration of one radiating element 44.   A section 56 of transmission line, e.g. a strip line, connects the distribution network to a 3 dB hybrid 58 which divides power equally between two strip line conductors 60, 62.   Received power fed to the circuit 58 along the conductors 60, 62 is combined with equal weighting and applied to the line 56.

The conductors 60 and 62 are configured, as described more fully below, to form vertically extending front and back modified Franklin elements 64 and 65. The conductors are disposed on a rigid planar support and are preferably formed by printed circuit techniques.

The direction of the aerial bore sight axis is indicated in Fig 5 by the arrow 63.   The planar support for the two Franklin elements lies in a vertical plane parallel to the bore sight.   Each Franklin element 64,65 is formed by repeatedly doubling the respective conductor 60, 62 back on itself to provide sections 67 in which the current flow is in one direction alternating with sections 69 in which the current flows in the opposite direction. As is well known, by relating the lengths of the sections correctly to the standard wave pattern it is possible to render the effects of the radiating sections 67 and 69 additive in the direction 63. However, an individual folded Franklin element will also radiate equally in the backwards direction and a reflector is required to cancel the backfire radiation and enhance the forward radiation in the direction of the arrow 63. In the construction according to Fig. 5, the reflector is a driven reflector provided by the rear element 65. This is spaced approximately one quarter wavelength behind the front radiating element 64 at the main operating frequency of the aerial, e.g. 1060 MHz with transmission at 1030 MHz and reception at 1090 MHz. Moreover the feed lengths of the conductors 60 and 62 from the hybrid 58 are such that the drive to the front element 64 lags the drive to the rear element 65 by 90°.

The dimensions of the strip line sections 67 and 69 are adjusted from the theoretical values, using design techniques well known in themselves, in order to render the aerial sufficiently broad band and to provide the correct characteristic impedance for matching into the distribution network.

Fig. 5 also illustrates one way of switching between high and low beams. The arrow 63 is assumed to represent the bore sight on the low beam. The broken line arrow 63a illustrates the bore sight for the upper beam tilted up by 9.5°. The directions 63 and 63a are at +4.75° and -4.75° with respect to the normal to the planar array. This change is effected by altering the electrical lengths of the elements 64 and 65 as illustrated schematically by switches 70 which are closed to switch in terminating transmission line sections 68. Although this technique requires two switches 70 for every element 44 of the aerial, the actual circuit complexity is not great and it is a convenient, purely electrical way of altering the elevation direction of the aerial beam.

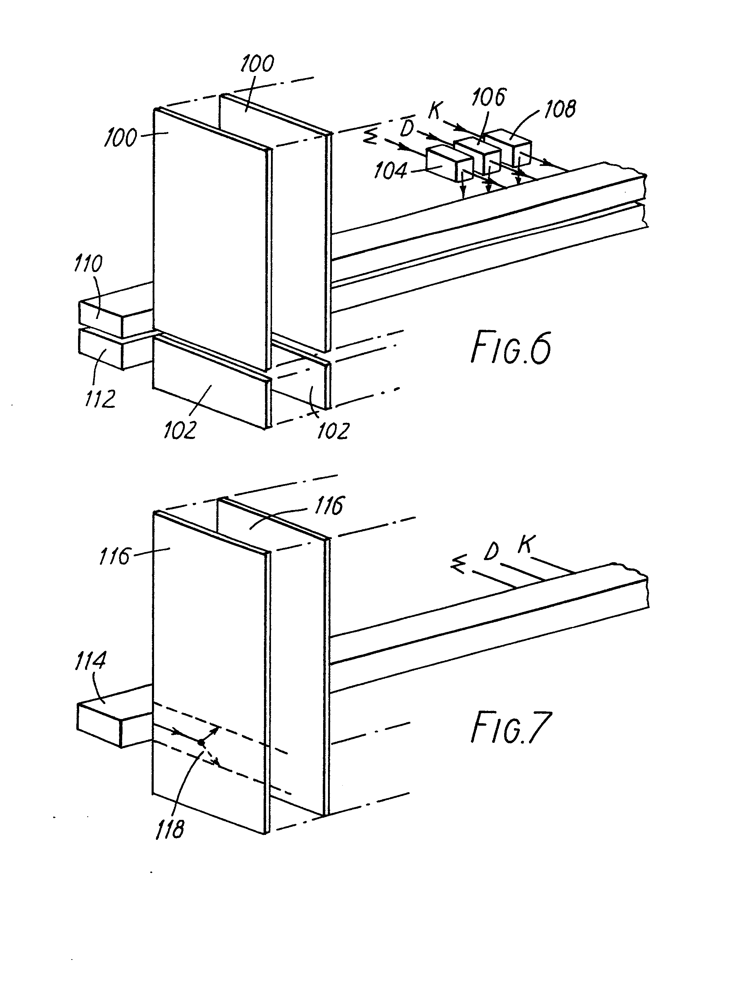

Fig. 6 shows schematically a second embodiment employing two independent arrays mounted one above the other. The upper array comprises vertical radiating elements 100 oriented and terminated so as to produce the required high beam. Similarly, the lower array 102 comprises elements arranged to produce the low beam. The lengths of the elements 102 can be shorter than the elements 100 for example 1.5X and 5X, because the low beam can be wider than the high beam with little operational disadvantage as described previously. The upper and lower arrays are fed by upper and lower distribution networks 110, 112. Three two-way switches 104, 106, 108 feed the sum, difference and control signals (represented by the symbols $\sum$, D and K) to the upper or lower distribution networks 110, 112 according to which beam is being used. The reliability of this embodiment is good because of the small number of switches required.

Fig. 7 shows an embodiment which uses one distribution network 114 to feed the elements 116 of the radiating array. Each element has upper and lower radiating portions of height say $5\lambda$ and $1.5\lambda$ respectively to which the distribution network is connected by means of a single-pole two-way microwave switch 118 (shown schematically). Each element therefore requires a separate switch 118. The upper $5\lambda$ portions are arranged to produce the upper beam and the lower $1.5\lambda$ portions to produce the lower beam. The sum, difference and control signals ($\sum$, D, K) are fed directly to the distribution network.

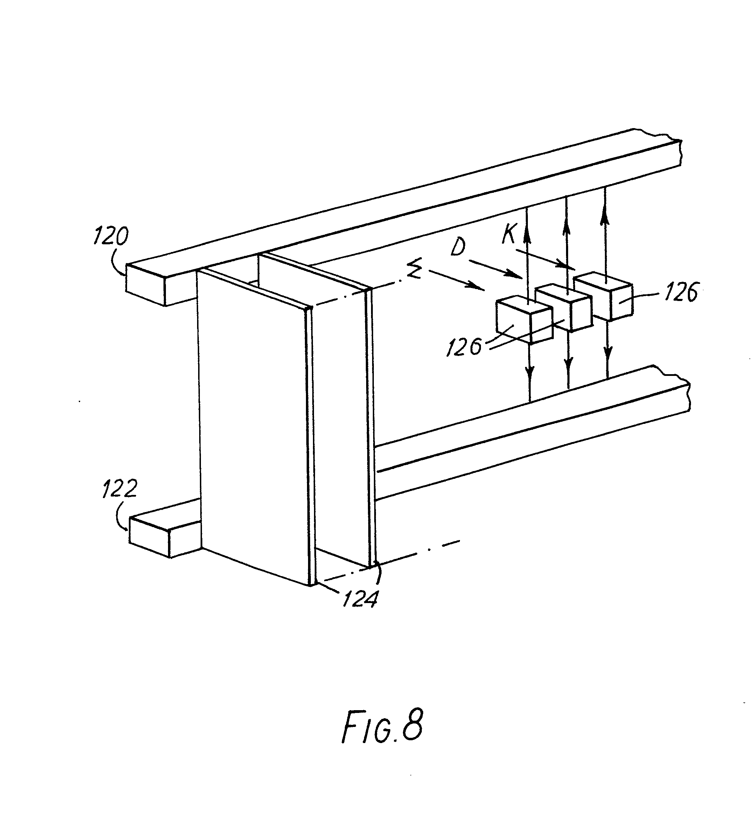

Figure 8 shows another embodiment using two distribution networks, 120, 122, to feed an array of vertical radiating elements 124 at their upper and lower ends respectively. The elements are terminated so that, when fed by the upper and lower distribution network 120, 122 the beam produced is at $+ 4.75^{\circ}$ and $-4.75^{\circ}$ respectively with respect to the perpendicular to the array. The array is mounted so that the perpendicular is at $+ 4.75^{\circ}$ to the horizontal, so that beams at $0^{\circ}$ or $9.5^{\circ}$ can be produced according to which distribution network is used. As with the embodiment of Fig 6, only 3 two-way switches 126 are required, each of which feeds one of the sum, difference and control signals ($\sum$, D, K) alterately to one or other distribution network 120, 122.

Alternatively each folded Franklin array 64, 65 can be separated into two parts connected by switches. For arrays with an overall vertical length of $5\lambda$ the arrays can be divided into lower parts $1.5\lambda$ long which are used alone for the low beam.

0088528

The upper parts of the arrays at 3.5 λ long and are switched into circuit for radiation on the upper beam. The different angle of elevation is achieved either by purely electrical measures or by physically tilting back the upper parts of the arrays. Finally, it is within the scope of the invention to achieve the different angles of elevation in entirely different ways such as switching between two separate aerials.

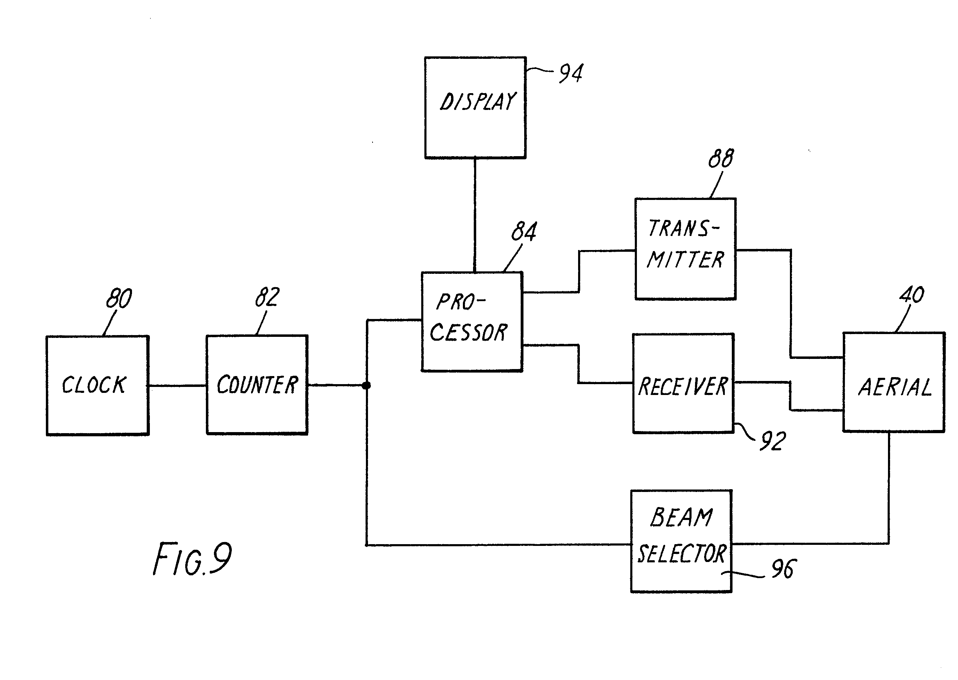

The operation of the complete system will be described with reference to Fig 9. A clock source 80 provides pulses to a counter-timer circuit 82 which, in turn provides trigger pulses initiating the radar cycles. A transmitter 88 and receiver 92 are connected to the aerial 40, employing conventional duplexer techniques, not shown. The transmitter 88 is triggered in response to each trigger pulse by a processor 84 which also receives and processes the replies from the receiver 92 and drives a display 94. Finally the trigger pulses are fed also to a beam selector 96 which controls the elevation of the aerial 40, for instance by way of the switches 70 of Fig 5. Each trigger pulse causes the beam selector 96 to change the aerial beam elevation or width so that alternate cycles employ the low beam and the intervening cycles employ the high beam.

- 15 -                    0088528

CLAIMS

1.    A secondary surveillance radar ground station apparatus comprising a transmitter (88), a receiver (92), and an aerial arrangement (40), characterised in that the aerial arrangement is capable of transmitting and receiving on either of a lower beam (30) providing significant energy at a low angle of elevation, and an upper beam (32) providing significant energy at a higher angle of elevation and insignificant energy at the lower angle of elevation, and by control means (80,82,84) arranged to effect a succession of interrogation cycles in which transmission from the lower beam are interspersed with transmissions from the upper beam, and such that, in each cycle, transmission and reception takes place from the same one beam, the control means being further arranged to ignore replies unless they originate within predetermined nearer and further bands of range pertaining to the upper and lower beams respectively.

2.    Apparatus according to claim 1, characterised in that the low angle of elevation is less than 0.5° and the upper beam (32) has an elevation of more than 8.5°.

3.    Apparatus according to claim 1 or 2, characterised in that the lower beam (30) is directed at the low angle of elevation.

4.    Apparatus according to claim 1 or 2, characterised in that the lower beam (30) has the same elevation as the upper beam but is a broader beam so as to provide the significant energy at the low angle of elevation.

5.    Apparatus according to any of the preceding claims, characterised in that interrogation cycles utilize the upper and lower beams (32,30) alternately.

6.    Apparatus according to any of the preceding claims, characterised in that the nearer and further bands of range are contiguous.

7.        Apparatus according to claim 6, characterised in that the range of the border between the upper and lower bands of range is approximately 150 km.

8.        A radar aerial comprising a plurality of vertical radiating elements arranged to form a substantially planar array, each element comprising a pair of radiating conductors, each in the form of a folded array, namely a front radiating conductor and a rear driven reflector conductor spaced behind the front conductor, and feed means arranged to distribute power to and combine power from the front and rear conductors in transmission and reception respectively with relative phases such that the rear conductors act as reflectors for the front conductors.

9.        An aerial according to claim 8, characterised in that each radiating conductor is switchably connected to a terminating transmission line section.

10.       An aerial according to claim 8, characterised in that each radiating conductor comprises upper and lower sections which can be switched into and out of electrical connection with each other so as to vary the electrical length of the element.

11.       An aerial according to claim 10, characterised in that the lower section is nominally one and a half wavelengths long and the upper section is nominally three and a half wavelengths long at the operating frequency.

12.       An aerial according to claim 11, characterised in that the upper sections are tilted back relative to the lower sections.

13.       An aerial according to claim 10, 11 or 12, characterised in that the lower sections are connected at their lower ends to the feed means.

14.       An aerial according to any of claims 8 to 10, characterised in that the radiating conductors are connected to the feed means part way along their length.

0088528

15.    An aerial according to claim 8, characterised in that two branches of the feed means are connected one to the upper and one to the lower end of the radiating conductors.

16.    An earial comprising two aerials according to claim 8, spaced one above the other.

17.    An aerial according to claim 8, characterised in that each radiating element comprises upper and lower elements which can be alternately switchably connected to the feed means.

18.    An aerial according to any of claims 8 to 17, characterised in that each folded array is a modified folded Franklin array.

19.    Apparatus according to claim 1, characterised in that the aerial arrangement comprises an aerial according to claim 6, and by electrical switching means adapted to alter the elevation of the aerial.

FIG.1

FIG.2

GAIN ⟶

0088528

2/8

FIG.3

FIG 4

_FIG.5_

FIG.6

FIG.7

FIG.8

FIG.9

0088528

**European Patent Office**

**EUROPEAN SEARCH REPORT**

Application number

EP 83 30 0756

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | DE-A-2 550 699 (LICENTIA PATENT-VERWALTUNG) * Figure 2, claim 1 * | 1 | G 01 S 13/76 H 01 Q 25/00 |
| Y | DE-A-2 936 168 (PLESSEY) * Figure 1 * | 1 | |
| A | FR-A-1 556 776 (ASSOCIATED ELECTRICAL IND.) * Figures 3, 4 * | | |
| A | FR-A-1 558 733 (ASSOCIATED ELECTRICAL IND.) * Figure 1 * | | |
| A | DE-C- 504 005 (MARCONI) * Figure 2 * | 8 | TECHNICAL FIELDS SEARCHED (Int. Cl. 3) |
| P,A | DE-A-3 149 200 (T.T. MAKIMOTO et al.) * Figure 10 * | 8 | G 01 S 13/00 H 01 Q 25/00 |
| A | DE-A-2 341 312 (WESTINGHOUSE) * Figure 1 * | | |
| A | DE-A-1 591 664 (TESLA) * Figure 4 * | | |
| | --- -/- | | |

The present search report has been drawn up for all claims

| Place of search | Date of completion of the search | Examiner |
|---|---|---|
| BERLIN | 17-05-1983 | BREUSING J |

## EUROPEAN SEARCH REPORT

European Patent Office

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int. Cl. 3) |
| A | US-A-3 618 093 (US-ARMY)<br><br>* Column 2, lines 20-46 *<br><br>----- | | |
| | | | **TECHNICAL FIELDS SEARCHED (Int. Cl. 3)** |
| | The present search report has been drawn up for all claims | | |

| Place of search<br>BERLIN | Date of completion of the search<br>17-05-1983 | Examiner<br>BREUSING J |
|---|---|---|